# EUROPEAN PATENT SPECIFICATION

(11) **EP 1 197 098 B1**
(45) Date of publication and mention of the grant of the patent: **04.10.2006**
(21) Application number: 00928512.3
(22) Date of filing: 28.04.2000
(51) Int. Cl.: H04Q 7/00, H04Q 7/20, H04Q 7/38

(54) **METHOD AND APPARATUS FOR FAST HANDOFF IN A COMMUNICATION SYSTEM**
VERFAHREN UND VORRICHTUNG FÜR SCHNELLES WEITERREICHEN IN EINEM KOMMUNIKATIONSSYSTEM
PROCEDE ET APPAREIL POUR TRANSFERT INTERCELLULAIRE RAPIDE DANS UN SYSTEME DE COMMUNICATION

(30) Priority: 18.06.1999 US 336092
(43) Date of publication of application: 17.04.2002
(73) Proprietor: MOTOROLA, INC., Schaumburg, IL 60196 (US)
(72) Inventor: LOVE, Robert, T., Barrington, IL 60010 (US)
(74) Representative: Openshaw, Paul Malcolm
(86) International application number: PCT/US2000/011436
(87) International publication number: WO 2000/079809

(56) References cited:
- WO-A-95/12297
- WO-A-99/27747
- US-A- 5 548 808

## Description

### Field of the Invention

The present invention relates to communication systems, in particular, a code division multiple access communication system.

### Background of the Invention

Handoff of a communication link from a first communication resource to a second resource is well known in the field of communication systems. There may be various types of handoff with various degrees of differences in operation and effects on the overall system processing capacity and performance. Hard handoff method, for example, involves transition between disjoint sets of base stations, different band of frequency assignments, different band of classes, or different frame offsets. Soft handoff normally involves transition from a first communication resource to a second one without disruption of the communication services, which may involve transition between different channels within the same frequency assignment.

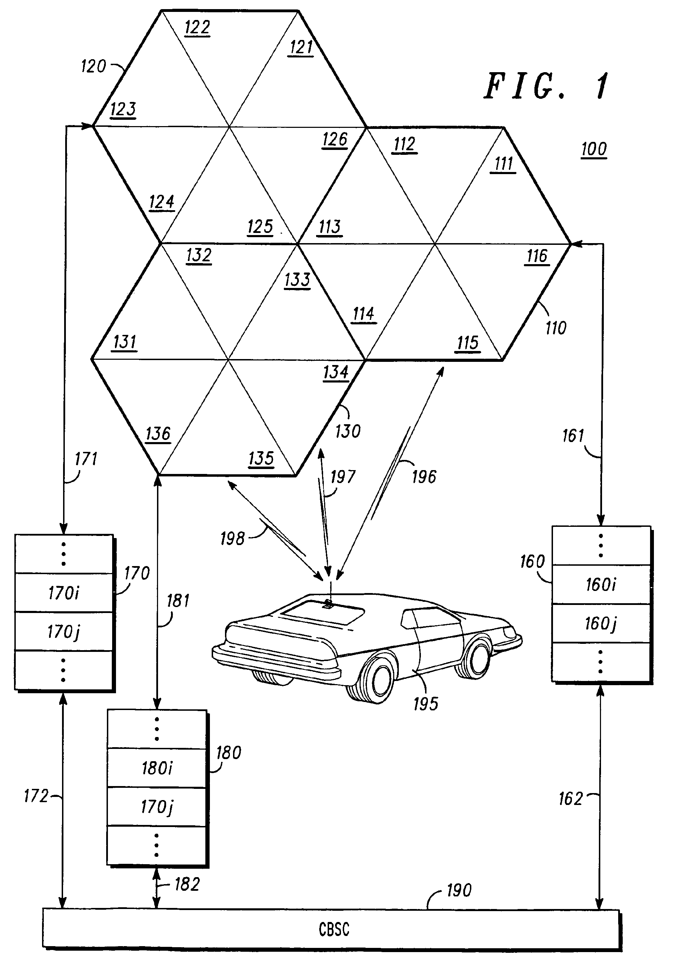

Referring to FIG. 1, a communication system network 100 comprising of cells 110, 120 and 130 is shown where each cell has a sector arrangement. A communication network may have more or less number of cells or sectors. Cells 110, 120 and 130 each is shown to have six sectors, sectors 111-16, 121-26 and 131-36 respectively. Each cell is shown to have an associated base station transceiver (BTS), such as BTSs 160, 170 and 180 for respectively cells 110, 120 and 130. Each sector of a cell may have independent hardware and software resources in a BTS associated with the cell. Such resources may include directional antenna for each sector, amplifier, controller and controlling software. Resources for each sector is shown by way of segmenting each cell resources into segments 160-i through j, 170-i through j, and 180-i through j. A central base station controller (CBSC) 190 is shown to communicate with every BTS for overall control and operation of the network 100. Such control includes management of mobile stations communicating with the network 100 through various BTS resources. Such communication may be through backhaul connections 162, 172 and 182 for respectively BTS 160, 170 and 180.

In code division multiple access (CDMA) communication system, a network, such as network 100, may be assigned to one frequency channel. A CDMA system includes a coding scheme that allows multiple users to operate and communicate on different carrier signals all having the same frequency channels. The network may further include pilot signals. Each pilot signal may be coded according to a unique code, thus distinguishing the pilot signals. Normally, each sector has an assigned pilot signal. All mobile stations to communicate with a sector and obtain channel estimates may use the pilot signal from the sector; there may be other uses of the pilot signal. A set of communication channels, all having a common frequency assignment, normally is associated with a pilot signal. When a mobile station detects a pilot signal from a sector with sufficient strength, the mobile station reports the signal strength to a BTS. Such a BTS is normally associated with the cell that incorporates the sector which originated the pilot signal. The BTS then assigns a forward traffic channel (FWC) on the same sector to the mobile station and directs the mobile station for other tasks. Other task may include soft handoff from the first assigned sector to another.

A mobile station in a CDMA system searches for pilot signals to detect presence of an available communication channel by making signal strength measurement of the pilot signals. The signal strength and interference levels in combination may be compared against a threshold before accepting presence of an available communication channel. The mobile station monitors pilot signal level received from neighboring sectors and cells and reports to the network which pilot signal crossed a set of predefined or dynamic thresholds. One of the sectors may be defined as the dominant sector and others around the dominant sector as the neighboring sectors. Normally, the mobile station identifies the dominant sector as the sector with strongest pilot signal or the sector that its transmitted traffic channel signal was received most strongly at the mobile station. Based on this report, the network orders the mobile station to add or remove channels from a list of channels commonly called an active set.

The information, targeted for a mobile station, modulated by appropriate code is sent from multiple sectors identified in the active set to the mobile station. The mobile station may then use the signals sent from the multiple sectors identified in the active set in a Rake receiver diversity combining method to improve its reception. The multiple sectors may be from a sector arrangement of the same cell or different cells. The active set contains identity of a set of sectors that are transmitting to the mobile station. Such identification may be in the form of identifying the pilot signals associated with the sectors. This method of adding and dropping channels from the active set for diversity combining is commonly referred to as soft handoff. When at least some of the multiple sectors in the handoff are from different sector of a common cell, the method of adding and dropping channels in the active set is commonly referred to as softer handoff.

The signal transmitted from a mobile station may be received and processed by the sectors that are included in the mobile station active set. The signals received at different sector may be combined to improve reception. For example, a mobile station 195 is shown to be in a three-way handoff in network 100. Signals 197 and 198 are associated respectively with sectors 134 and 135 of cell 130, and signal 196 is associated with sector 115 of cell 110. Each signal is shown to be bi-directional. The mobile station 195 may combine all three signals, 196, 197 and 198 transmitted from the base stations to improve forward link reception. The CBSC 190 may instruct BTSs 160 and 180 to combine the received signals 196, 197 and 198 to improve reverse link reception. On the forward link, sectors in the soft or softer handoff each transmit a signal targeted for the mobile station. On the reverse link, the mobile station may transmit only one signal to be received possibly by all sectors involved in the handoff. The CBSC 190 involves all BTSs associated with each sector in the active set through backhaul connections 162, 172 and 182 to execute soft or softer handoff.

While soft handoff or softer handoff improves an overall performance of the system, in some situation it may negatively impact system capacity and resources. For example, multiple softer handoff routines may burden the overall network backhual capacity by requiring each sector, through an associated BTS, to communicate with the CBSC 190 more often than it may be necessary, in addition of increasing processing load of the CBSC 190. Moreover, in case of a dispatch, for example, the speed of the dispatch is negatively impacted.

WO 95 12297 A discloses a method and apparatus for reducing the average downlink transmitted power from base stations during soft handoff, comprising the steps of: adjusting a transmit gain of one of at least two forward communication channels assigned to a mobile station in respective sectors of a cell to zero or very low gain; and placing the said sectors of said cell in an active channel set at said mobile station.

Therefore, there is a need for a method and apparatus that provides advantages of handoffs in a communication system without its negative impact.

### Summary of the Invention

In a first aspect, the present invention provides a method in a communication system, as claimed in claim 1.

In a further aspect, the present invention provides an apparatus in a communication system, as claimed in 6.

Further aspects are as claimed in the dependent claims.

### Brief Description of the Drawings

FIG. 1 depicts a communication network cell and sector arrangements.
FIG. 2 depicts a call flow according to prior art.
FIG. 3 depicts a communication flow according to prior art.
FIG. 4 depicts a communication call flow according to various aspects of the invention.
FIG. 5 depicts a communication call flow according to various aspects of the invention.
FIG. 6 depicts a block diagram of a communication system according to various aspects of the invention.

### Detailed Description of the Preferred Embodiment(s)

In one or more aspects of the invention, a communication system assigns to a mobile station at least a forward communication channel from each sector of a cell. The communication system may have one or more cells to provide communication services to a number of mobile stations in a coverage area. Each cell may have several sectors. Each sector may independently provide the communication services. The communication system assigns at each sector orthogonal spreading codes to the assigned channels. Assigning codes to each channel successfully ensures that each channel is ready to be used once a signal is transmitted with adequate transmit gain. According to the invention, the communication system adjusts a transmit gain of at least one of the assigned channels to zero transmit gain, or a very low transmit gain. The adjustment may take place at the sector. The mobile station places each sector of the cell that has at least one assigned channel in an active channel set. The mobile station normally combines the strongest signal paths in terms of pilot strength or pilot signal to signal plus interference ratio (Ec/Io) taken from its active set; however, according to the invention, the mobile station does not always combine a signal path of a channel in its active set that has a zero transmit gain, or a very low transmit gain, set at its transmitting sector even in the case were its pilot Ec/Io is above lock and combining thresholds. The mobile station, however, normally reports at least one pilot Ec/Io of pilot signals transmitted from each sector of the cell. The communication system compares the reported pilot signal Ec/Io to a threshold. The communication system furthermore selects, based on the comparison, at least one of the channels for adjusting its transmit gain to zero transmit gain or a very low transmit gain. The mobile station continues to report Ec/Io information of pilot signals measured at the mobile station. The communication system compares the newly reported Ec/Io of the pilot signals transmitted from each sector of the cell to at least one of a threshold-add and a threshold-compare. Based on the result of the comparison, the communication system changes transmit gain of at least one of the channels with a transmit gain adjusted to zero (or low) transmit gain from zero (or low) transmit gain to a forward power control gain setting of forward communication channels.

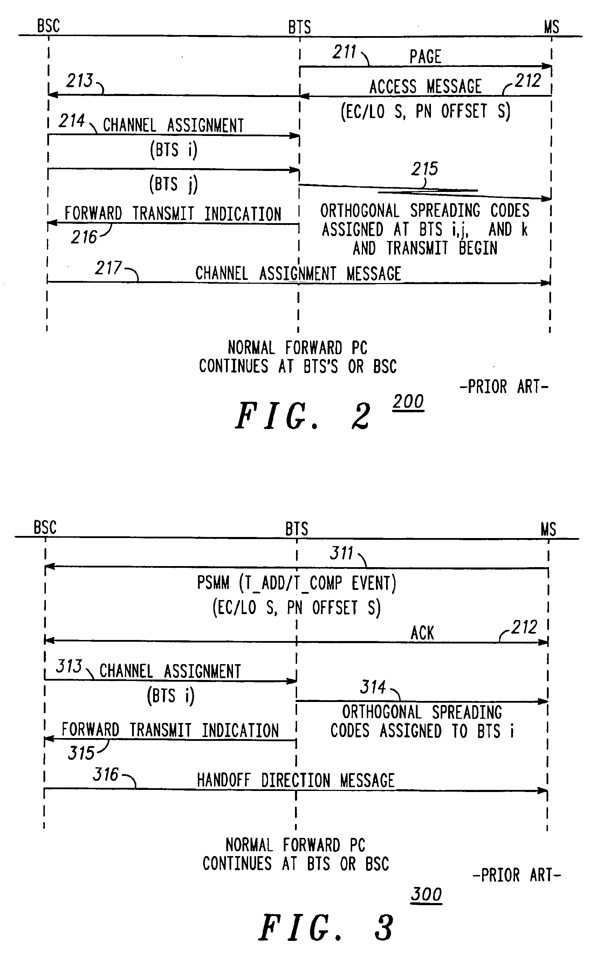

One or more aspects of the invention may be more apparent by making references to communication call flows shown in FIGs. 2, 3, 4 and 5. A call flow 200 shown in FIG. 2 is according to the prior art. Call flow 200 may be a call flow between a mobile station and a base station to establish a call connection. A call flow 300 shown in FIG. 3 is according to prior art. Call flow 300 may be a call flow to perform softer handoff between a mobile station and a base station after establishing a call connection.

Referring to FIG. 2, to make a call connection from a base station to a mobile station, for example, a BTS sends a page message 211 to a mobile station. The mobile station reports back on an access message 212 Ec/Io and Pseudo Code (PN) offset value of pilot signals measured at the mobile station. The pilot signals were transmitted from different sectors in the communication system. Such information indicates to the base station whether the mobile station is located in an area that can adequately be provided with communication services, and if such a condition exist, which BTS (i.e. which sector) may most effectively provide such services. The base station controller (BSC), which may be a centralized BSC, after receiving through a message 213 the information contained in message 212, selects one or more BTSs to serve the mobile station. Such a selection may be based on comparing Ec/Io and PN offset information to one or more thresholds. The BSC communicates the channel assignments to the serving BTSs through a channel assignment message 214 which includes the orthogonal spreading codes or Walsh codes to use for each forward channel. There may be more than one sector (BTS) that can provide the communication service. Each selected BTS would transmit the information targeted for the mobile station. Each selected BTS assigns orthogonal spreading codes, such as Walsh code, to each forward link and begins to transmit on those forward channels to the mobile station. At about the same time, each BTS communicates that information to the BSC via a forward channel transmit indication message 216. The BSC subsequently sends a message to mobile station informing the mobile station that one or more channels have been assigned for the mobile station along with their corresponding Walsh code and pilot PN offset via channel assignment message 217. The mobile station places the assigned channels in its active channel set list. The mobile station, in such situation, combines the top n strongest signals (in terms of pilot Ec/Io) transmitted from all sectors that the base station has identified for the mobile station.

Referring to FIG. 3, call flow 300 shows a call flow between a mobile station and the base station for performing softer handoff. The mobile station, normally, searches for pilot signals transmitted from different sectors for measuring their Ec/Io and PN offset value. The mobile station transmits such information to the BSC via a Pilot Strength Mobile Measurement (PSMM) 311; in return, BSC acknowledge such information via ACK message 312. If the reported Ec/Io meets a threshold level, BSC sends a Channel Assignment message 313 to the BTS responsible for transmission of that pilot signal to assign an orthogonal spreading code to a newly assigned channel for the mobile station. Each selected BTS assigns orthogonal spreading codes, such as Walsh code, to each newly assigned forward channel and begins to transmit on those forward channels to the mobile station. The BTS indicates via a message 315 to BSC that transmission has begun on the new forward channel. BSC in response sends a handoff direction message 316 to the mobile station directing the mobile station to include the newly assigned channel in the active channel set of the mobile station for softer combining operation along with the Walsh code and pilot PN offset.

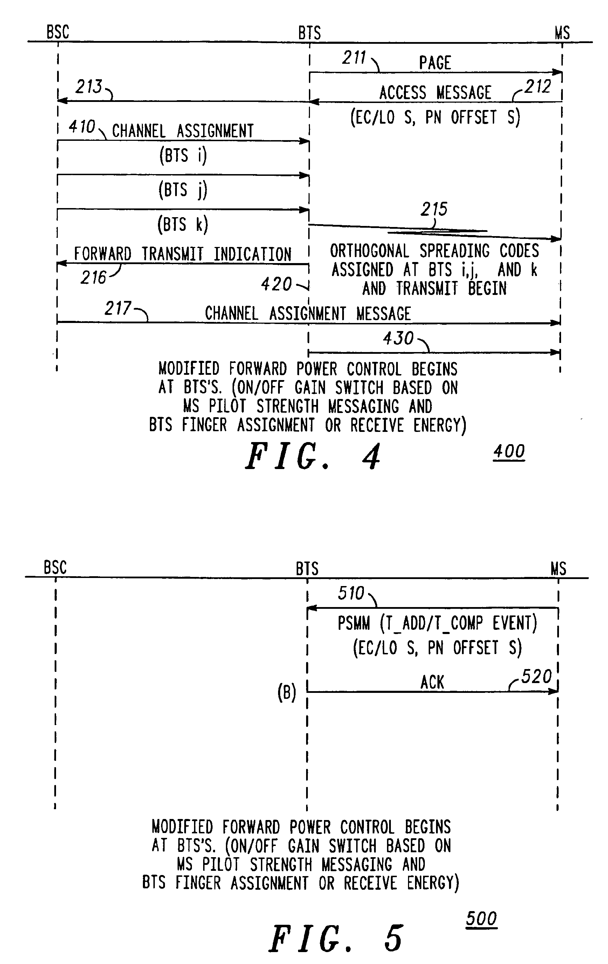

Referring to FIG 4, one or more aspects of the invention are shown by way of a call flow 300. Messages 211, 212 and 213 may be performed according to prior art. According to the invention, when BSC decided to assign a channel at a sector of a cell to the mobile station, BSC assigns at least one channel from each sector in the cell of the communication system. For example, if Ec/Io of a sector of a cell was acceptable (i.e. above a threshold,) the BSC assigns a channel from every sector of the cell that has at least one acceptable Ec/Io. In connection, the reverse link Rake receiver finger energy may be measured to determine if a mobile station is communicating on a channel at a sector. The communication system, in turn, assigns other channels at other sectors of the same cell to the mobile station; however, their transmit gain is set to zero or very low transmit gain. Such messaging between BSC and BTS is shown by way of message 410. The BTS then assigns orthogonal spreading codes to each assigned channel, and begins to transmit on each channel using a gain equal to the power control gain or to zero or a low value based on Ec/Io information obtained from the access message and based on the reverse link Rake receiver finger energy from each sector. A forward transmit indication message 216 is sent to BSC from BTS. In response, BSC transmits message 217 to the mobile station regarding channel assignments which include the assigned orthogonal spreading codes and the pilot PN offsets used via message 217. In connection, BTS internally sets the transmit gain of certain channels in the channel assignments to zero (or very low) transmit gain via an internal control message 420, and optionally informs the mobile station, via a message 430, thus, preventing the mobile station from assigning a demodulator finger to the channels that have zero (or very low) transmit gain. Alternatively instead of message 430 the mobile can determine the signal to noise ratio of the data signal to determine when not to combine the signal even when the corresponding pilot Ec/Io can be detected. According to the invention, BSC assigns more channels to the mobile station even though Ec/Io of some of the channels either did not satisfy the threshold or were not received at all. The BSC assigns at least a channel from each sector of a cell that has at least one sector with acceptable Ec/Io. BTS, in connection, assigns orthogonal codes to all assigned channels, few of which would have zero (or very low) transmit gain.

Referring to FIG. 5, a call flow 500 is shown to reduce the number of communication between BTS and BSC for performing a softer handoff direction for a mobile station mainly due to call flow 400 shown in FIG. 4. Reduction of messaging between BTS and BSC allows reduction of the backhual communication. Such reduction improves efficiency of backhual resources. According to the invention, mobile station transmits PSMM message 510 to BTS, and BTS directly acknowledges PSMM information via message 520 with the mobile station. The PSMM information are compared to Threshold-Add and Threshold_Comp to decide whether one of the assigned channels with zero (or very low) transmit gain should change its transmit gain to forward channel gain value. The decision to use zero (or very low) transmit gain may also be based on the reverse link finger energy for a given sector which is zero (or very low) if there is no finger assigned in that sector. The mobile station accordingly assigns a finger to the newly added channel, and combines the channel with other channel in a softer handoff operation. As such, messaging between the BSC and BTS has been eliminated or substantially reduced.

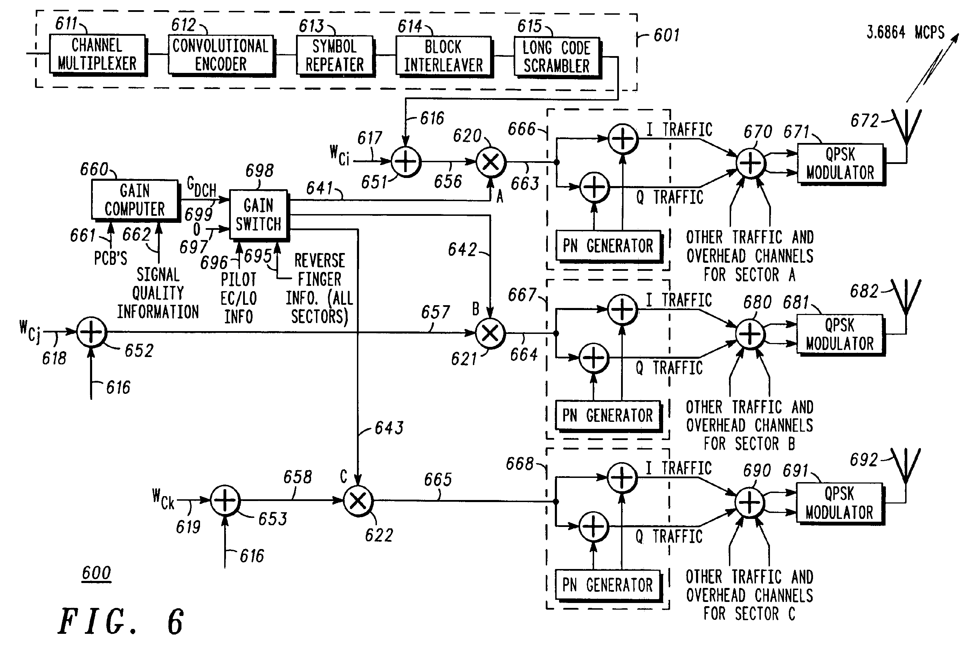

One or more aspects of the invention may be more apparent in block diagram 600 shown in FIG. 6. Block diagram 600 is a conceptual block diagram of various blocks in a communication system supporting operation of a cell that has three sectors. A sector sums its traffic, control and overhead channels in block 670, 680, or 690. The summed signal passes to a modulator, such as modulator 671, 681 or 691 before being transmitted on appropriate frequency via an antenna, such as antenna 672, 682, or 692. The communication system through its control channels or otherwise communicates with the mobile station via blocks 670, 680 or 690 regarding the identification of the sectors that are needed to be included in the mobile station active channel list. The mobile station may incorporate a memory element to store the list for its use. Moreover, through the same means, the communication system communicates with the mobile station that certain of the channels in the active list should not be involved in a softer combining operation. This last step is optional especially if the mobile station bases combining partly on whether the data signal (instead of pilot signal) has energy exceeding some combining threshold.

The information to be transmitted to a mobile station from a sector is received at input 610 of a transmit block 601. Transmit block 601 may include a channel multiplexer 611, a convolutional encoder 612, a symbol repeater 613, a block interleaver 614 and a long code scrambler 615. The transmit information pass through blocks 611-15 to produce encoded transmit information 616. A coder 651 adds encoded information 616 to an assigned Walsh code 617 to produce a code multiplexed information 656. According to the invention, encoded information 616 pass to all other coders at other sectors, such as coders 652 and 653, to be code multiplexed via a code adding operation with other Walsh codes, such as Walsh codes 618 and 619. The code multiplexed information 657 and 658 are produced as a result. Walsh codes 617, 618 and 619 are assigned to the user of the information at each sector.

The gain adjuster 620 adjusts the gain of code multiplexed information 656 according to an output 699 via an output 641. For adjusting gain of code multiplexed information 657 and 658, a gain switch 698 adjusts the gain to either zero (or very low) transmit gain or gain according to output 699 via outputs 642 and 643. The selection is based on whether pilot Ec/Io of the sector measured by mobile station, provided at input 696, of the user has satisfied threshold-add or threshold-comp. If either threshold is satisfied, the transmit gain adjust is according to output 699; otherwise, the transmit gain is equal to a zero (or very low) transmit gain value 697. Additionally, the selection may be based on whether the base station has measured energy on a Rake finger receiver applied to the reverse link of the sector. If the energy is attributed to a signal transmitted from the mobile station, the transmit-gain is adjusted according to output 699. The transmit gain output 699 is based on information, for example 661 power control bit information and signal quality information 662, received by the system at a gain computer 660. After gain adjustments, signals 663, 664 and 665 are produced.

Correspondingly at each sector, the signals 663, 664 and 665 are inputs to transmit blocks 666, 667 and 668 where they are scrambled by a pair of pseudo-random codes to produce appropriate transmit signals for combining operation in summing blocks 670, 682 and 692. According to the invention, if code multiplexed information 657 and 658 are to be involved in a softer combining operation the mobile station, one or two commands communicated between the mobile station and the base station completes the operation. Such completion may be via changing the transmit gain of the signals involved in the softer combine operation from zero (or very low) gain to a transmit gain according to output 699. Such a change is accomplished by simply changing a data bit in gain switch 698. As a result, a substantial reduction of control and communication between the involved blocks is achieved. This in turn reduces the backhaul communication traffic.

## Claims

1. A method in a communication system, comprising the steps of:
(a) assigning (410) to a mobile station at least a forward communication channel from every sector of a cell having several sectors in said communication system, in response to said cell having at least one reported pilot signal to signal plus interference ratio, Ec/Io, reported by the mobile station and determined to be above a first threshold;
(b) assigning (215) orthogonal spreading codes to all channels assigned in said step (a);
(c) adjusting (420) a transmit gain of at least one of said channels assigned in said step (a) to zero or very low gain; and
(d) placing each sector of said cell that has at least one assigned channel in step (a) in an active channel set at said mobile station.

2. The method as recited in claim 1, further comprising the steps of:
(e) reporting at least one pilot signal to signal plus interference ratio, Ec/Io, of pilot signals transmitted from each sector of said cell;
(f) comparing said at least one pilot signal to signal plus interference ratio, Ec/Io, to a second threshold; and
(g) selecting, based on said comparing at least one of said channels for adjusting said transmit gain to zero or very low gain.

3. The method as recited in claim 1, further comprising the step of:
(h) preventing said mobile station from combining signals from channels in said active set that have an associated transmit gain set to zero or very low.

4. The method as recited in claim 1, further comprising the steps of:
(i) comparing Ec/Io of pilot signals transmitted from each sector of said cell to at least one of a threshold-add and threshold-compare;
(j) reporting a result of said comparing at step (i) to said cell; and
(k) changing, based on said reported result, the transmit gain of at least one of said channels adjusted to zero or very low gain from zero or very low gain to a forward power control gain setting of forward communication channels.

5. The method as recited in claim 1, further comprising the steps of:
(l) measuring a Rake receiver finger energy level, wherein said Rake receiver is at one sector of said cell;
(m) comparing said measured Rake receiver finger energy level to a threshold; and
(n) selecting, based on said comparing at said step (m), at least one of said channels for adjusting said transmit gain to zero or very low gain at said step (c).

6. An apparatus in a communication system, comprising:
means for assigning to a mobile station at least a forward communication channel from every sector of a cell having several sectors in said communication system, in response to said cell having at least one reported pilot signal to signal plus interference ratio, Ec/Io, reported by the mobile station and determined to be above a first threshold;
means for assigning orthogonal spreading codes to all channels assigned in said cell to said mobile station;
means for adjusting (620, 698) a transmit gain of at least one of said channels assigned in said cell to zero or very low gain; and
means for placing each sector of said cell that has at least one assigned channel in an active channel set at said mobile station.

7. The apparatus of claim 6, further comprising:
means for reporting at least one pilot signal to signal plus interference ratio, Ec/Io, of pilot signals transmitted from each sector of said cell;
means for comparing said at least one pilot signal to signal plus interference ratio, Ec/Io, to a second threshold; and
means for selecting, based on said comparing at said step (f), at least one of said channels for said adjusting said transmit gain to zero or very low gain at said step (c).

8. The apparatus of claim 6, further comprising:
means for preventing said mobile station from combining signals from channels in said active set that have an associated transmit gain set to zero or very low.

9. The apparatus of claim 6, further comprising:
means for comparing Ec/Io of pilot signals transmitted from each sector of said cell to at least one of a threshold-add and threshold-compare;
means for reporting a result of said comparing to said cell; and
means for changing, based on said reported result, the transmit gain of at least one of said channels adjusted to zero or very low gain from zero or very low gain to a forward power control gain setting of forward communication channels.

10. The apparatus of claim 6, further comprising:
means for measuring a Rake receiver finger energy level, wherein said Rake receiver is at one sector of said cell;
means for comparing said measured Rake receiver finger energy level to a threshold; and
means for selecting, based on said comparing at least one of said channels for adjusting said transmit gain to zero or very low gain.

## Patentansprüche

1. Verfahren in einem Kommunikationssystem, umfassend die Schritte:
(a) Zuordnen (410), zu einer Mobilstation, wenigstens eines Vorwärtskommunikationskanals aus jedem Sektor einer Zelle mit mehreren Sektoren in dem Kommunikationssystem als Antwort darauf, dass die Zelle wenigstens ein berichtetes Pilotsignal/Signal-plus-Interferenz-Verhältnis, Ec/Io, das von der Mobilstation berichtet und als oberhalb eines ersten Schwellenwertes liegend bestimmt wurde, aufweist;
(b) Zuordnen (215) orthogonaler Spreizcodes zu allen in Schritt (a) zugeordneten Kanälen;
(c) Einstellen (420) einer Sendeverstärkung wenigstens eines der in Schritt (a) zugeordneten Kanäle auf Null oder eine sehr kleine Verstärkung; und
(d) Platzieren jedes Sektors der Zelle, der in Schritt (a) wenigstens einen zugeordneten Kanal aufweist, in einen Satz aktiver Kanäle bei der Mobilstation.

2. Verfahren wie in Anspruch 1 zitiert, weiter umfassend die Schritte:
(e) Berichten wenigstens eines Pilotsignal/Signal-plus-Interferenz-Verhältnisses, Ec/Io, von Pilotsignalen, die von jedem Sektor der Zelle gesendet werden;
(f) Vergleichen des wenigstens einen Pilotsignal/Signal-plus-Interferenz-Verhältnisses, Ec/Io, mit einem zweiten Schwellenwert; und
(g) Auswählen, basierend auf dem Vergleichen, des wenigstens einen der Kanäle zum Einstellen der Sendeverstärkung auf Null oder eine sehr kleine Verstärkung.

3. Verfahren wie in Anspruch 1 zitiert, weiter umfassend den Schritt:
(h) Verhindern, dass die Mobilstation Signale von Kanälen in dem aktiven Satz, die eine zugeordnete, auf Null oder sehr klein eingestellte Sendeverstärkung aufweisen, kombiniert.

4. Verfahren wie in Anspruch 1 zitiert, weiter umfassend die Schritte:
(i) Vergleichen von Ec/Io von von jedem Sektor der Zelle gesendeten Pilotsignalen mit wenigstens einem Addierschwellenwert und/oder einem Vergleichsschwellenwert;
(j) Berichten eines Ergebnisses des Vergleichens bei Schritt (i) an die Zelle; und
(k) Ändern, basierend auf dem berichteten Ergebnis, der Sendeverstärkung wenigstens eines der auf Null oder eine sehr kleine Verstärkung eingestellten Kanäle von Null oder einer sehr kleinen Verstärkung auf eine Vorwärtsleistungssteuerungsverstärkungseinstellung von Vorwärtskommunikationskanälen.

5. Verfahren wie in Anspruch 1 zitiert, weiter umfassend die Schritte:
(l) Messen eines Rake-Empfängerfinger-Energiepegels, wobei der Rake-Empfänger bei einem Sektor der Zelle ist;
(m) Vergleichen des gemessenen Rake-Empfängerfinger-Energiepegels mit einem Schwellenwert; und
(n) Auswählen, basierend auf dem Vergleichen bei Schritt (m), wenigstens eines der Kanäle zum Einstellen der Sendeverstärkung auf Null oder eine sehr kleine Verstärkung bei Schritt (c).

6. Vorrichtung in einem Kommunikationssystem, umfassend:
Mittel zum Zuweisen, zu einer Mobilstation, wenigstens eines Vorwärtskommunikationskanals aus jedem Sektor einer Zelle mit mehreren Sektoren in dem Kommunikationssystem als Antwort darauf, dass die Zelle wenigstens ein berichtetes Pilotsignal/Signal-plus-Interferenz-Verhältnis, Ec/Io, aufweist, das von der Mobilstation berichtet und als oberhalb eines ersten Schwellenwertes liegend bestimmt wurde;
Mittel zum Zuweisen orthogonaler Spreizcodes zu allen in der Zelle zu der Mobilstation zugeordneten Kanälen;
Mittel zum Einstellen (620, 698) einer Sendeverstärkung wenigstens eines der zugeordneten Kanäle in der Zelle auf Null oder eine sehr kleine Verstärkung;
Mittel zum Platzieren jedes Sektors der Zelle, der wenigstens einen zugeordneten Kanal aufweist, in einen Satz aktiver Kanäle bei der Mobilstation.

7. Vorrichtung nach Anspruch 6, weiter umfassend:
Mittel zum Berichten wenigstens eines Pilotsignal/Signal-plus-Interferenzverhältnisses, Ec/Io, von von jedem Sektor der Zelle gesendeten Pilotsignalen;
Mittel zum Vergleichen des wenigstens einen Pilotsignal/Signal-plus-Interferenz-Verhältnisses, Ec/Io, mit einem zweiten Schwellenwert; und
Mittel zum Auswählen, basierend auf dem Vergleichen bei Schritt (f), wenigstens eines der Kanäle zum Einstellen der Sendeverstärkung auf Null oder eine sehr kleine Verstärkung bei Schritt (c).

8. Vorrichtung nach Anspruch 6, weiter umfassend:
Mittel zum Verhindern, dass die Mobilstation Signale von Kanälen in dem aktiven Satz, die eine zugeordnete, auf Null oder sehr klein eingestellte Sendeverstärkung aufweisen, kombiniert.

9. Vorrichtung nach Anspruch 6, weiter umfassend:
Mittel zum Vergleichen von EC/Io von von jedem Sektor der Zelle gesendeten Pilotsignale mit wenigstens einem Addierschwellenwert und/oder einem Vergleichsschwellenwert;
Mittel zum Berichten eines Ergebnisses des Vergleichens an die Zelle; und
Mittel zum Ändern, basierend auf dem berichteten Ergebnis, der Sendeverstärkung wenigstens eines der auf Null oder eine sehr kleine Verstärkung eingestellten Kanäle von Null oder einer sehr kleinen Verstärkung auf eine Vorwärtsleistungssteuerungsverstärkungseinstellung für Vorwärtskommunikationskanäle.

10. Vorrichtung nach Anspruch 6, weiter umfassend:
Mittel zum Messen eines Rake-Empfängerfinger-Energiepegels, wobei der Rake-Empfänger bei einem Sektor der Zelle ist;
Mittel zum Vergleichen des gemessenen Rake-Empfängerfinger-Enegiepegels mit einem Schwellenwert; und
Mittel zum Auswählen, basierend auf dem Vergleichen, wenigstens eines der Kanäle zum Einstellen der Sendeverstärkung auf Null oder eine sehr kleine Verstärkung.

## Revendications

1. Procédé dans un système de communication, comprenant les étapes consistant à :
(a) attribuer (410) à une station mobile au moins un canal de communication aller depuis chaque secteur d'une cellule ayant plusieurs secteurs dans ledit système de communication, en réponse au fait que ladite cellule a au moins un rapport signal pilote sur signal plus interférences rapporté, Ec/Io, rapporté par la station mobile et déterminé comme étant supérieur à un premier seuil ;
(b) attribuer (215) des codes d'étalement orthogonaux à tous les canaux attribués à ladite étape (a) ;
(c) ajuster (420) un gain de transmission d'au moins l'un desdits canaux attribués à ladite étape (a) à un gain nul ou très bas ; et
(d) placer chaque secteur de ladite cellule qui a eu au moins un canal attribué à l'étape (a) dans un ensemble de canaux actifs au niveau de ladite station mobile.

2. Procédé selon la revendication 1, comprenant, en outre, les étapes consistant à :
(e) rapporter au moins un rapport signal pilote sur signal plus interférences, Ec/Io, des signaux pilotes transmis depuis chaque secteur de ladite cellule ;
(f) comparer ledit au moins un rapport signal pilote sur signal plus interférences, Ec/Io, à un deuxième seuil ; et
(g) sélectionner, en fonction de ladite comparaison, au moins l'un desdits canaux pour l'ajustement dudit gain de transmission à un gain nul ou très bas.

3. Procédé selon la revendication 1, comprenant, en outre, l'étape consistant à :
(h) empêcher ladite station mobile de combiner les signaux provenant des canaux dudit ensemble actif qui ont un gain de transmission associé défini à un gain nul ou très bas.

4. Procédé selon la revendication 1, comprenant, en outre, les étapes consistant à :
(i) comparer le rapport Ec/Io des signaux pilotes transmis depuis chaque secteur de ladite cellule à au moins l'un d'un seuil-ajout et d'un seuil-comparaison ;
(j) rapporter à ladite cellule un résultat de ladite comparaison effectuée à l'étape (i) ; et
(k) changer, en fonction dudit résultat rapporté, le gain de transmission d'au moins l'un desdits canaux ajustés à un gain nul ou très bas du gain nul ou très bas à un réglage de gain de contrôle de puissance de liaison aller des canaux de communication aller.

5. Procédé selon la revendication 1, comprenant, en outre, les étapes consistant à :
(l) mesurer le niveau d'énergie des doigts du récepteur Rake, où ledit récepteur Rake se trouve au niveau d'un secteur de ladite cellule ;
(m) comparer ledit niveau d'énergie mesuré des doigts du récepteur Rake à un seuil ; et
(n) sélectionner, en fonction de ladite comparaison effectuée à ladite étape (m), au moins l'un desdits canaux pour l'ajustement dudit gain de transmission à un gain nul ou très bas à ladite étape (c).

6. Appareil dans un système de communication, comprenant :
des moyens pour attribuer à une station mobile au moins un canal de communication aller depuis chaque secteur d'une cellule ayant plusieurs secteurs dans ledit système de communication, en réponse au fait que ladite cellule a au moins un rapport signal pilote sur signal plus interférences rapporté, Ec/Io, rapporté par la station mobile et déterminé comme étant supérieur à un premier seuil ;
des moyens pour attribuer des codes d'étalement orthogonaux à tous les canaux attribués dans ladite cellule à ladite station mobile ;
des moyens pour ajuster (620, 698) un gain de transmission d'au moins l'un desdits canaux attribués dans ladite cellule à un gain nul ou très bas ; et
des moyens pour placer chaque secteur de ladite cellule qui a eu au moins un canal attribué dans un ensemble de canaux actifs au niveau de ladite station mobile.

7. Appareil selon la revendication 6, comprenant, en outre :
des moyens pour rapporter au moins un rapport signal pilote sur signal plus interférences, Ec/Io, des signaux pilotes transmis depuis chaque secteur de ladite cellule ;
des moyens pour comparer ledit au moins un rapport signal pilote sur signal plus interférences, Ec/Io, à un deuxième seuil ; et
des moyens pour sélectionner, en fonction de ladite comparaison effectuée à ladite étape (f), au moins l'un desdits canaux pour ledit ajustement dudit gain de transmission à un gain nul ou très bas à ladite étape (c).

8. Appareil selon la revendication 6, comprenant, en outre :
des moyens pour empêcher ladite station mobile de combiner les signaux provenant des canaux dudit ensemble actif qui ont un gain de transmission associé défini à un gain nul ou très bas.

9. Appareil selon la revendication 6, comprenant, en outre :
des moyens pour comparer le rapport Ec/Io des signaux pilotes transmis depuis chaque secteur de ladite cellule à au moins l'un d'un seuil-ajout et d'un seuil-comparaison ;
des moyens pour rapporter à ladite cellule un résultat de ladite comparaison ; et
des moyens pour changer, en fonction dudit résultat rapporté, le gain de transmission d'au moins l'un desdits canaux ajustés à un gain nul ou très bas du gain nul ou très bas à un réglage de gain de contrôle de puissance de liaison aller des canaux de communication aller.

10. Appareil selon la revendication 6, comprenant, en outre :
des moyens pour mesurer le niveau d'énergie des doigts du récepteur Rake, où ledit récepteur Rake se trouve au niveau d'un secteur de ladite cellule ;
des moyens pour comparer ledit niveau d'énergie mesuré des doigts du récepteur Rake à un seuil ; et
des moyens pour sélectionner, en fonction de ladite comparaison, au moins l'un desdits canaux pour l'ajustement dudit gain de transmission à un gain nul ou très bas.
